(19) Europäisches Patentamt
European Patent Office
Office européen des brevets

(11) EP 4 266 568 A1

(12) EUROPEAN PATENT APPLICATION
published in accordance with Art. 153(4) EPC

(43) Date of publication:
25.10.2023 Bulletin 2023/43

(51) International Patent Classification (IPC):
H02P 6/20 (2016.01)

(21) Application number: 21933229.3

(52) Cooperative Patent Classification (CPC):
H02P 6/20

(22) Date of filing: 16.11.2021

(86) International application number:
PCT/JP2021/042055

(87) International publication number:
WO 2022/201631 (29.09.2022 Gazette 2022/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.03.2021 JP 2021053465

(71) Applicant: AISIN CORPORATION
Kariya-shi, Aichi 448-8650 (JP)

(72) Inventors:
• YAMAMOTO, Takeru
Kariya-shi, Aichi 448-8650 (JP)
• USHITA, Yoshiaki
Kariya-shi, Aichi 448-8650 (JP)
• ISHII, Tomoya
Kariya-shi, Aichi 448-8650 (JP)
• ONOSAKA, Naoki
Kariya-shi, Aichi 448-8650 (JP)

(74) Representative: Kramer Barske Schmidtchen
Patentanwälte PartG mbB
European Patent Attorneys
Landsberger Strasse 300
80687 München (DE)

(54) MOTOR CONTROL DEVICE

(57) A motor control device includes a control unit configured to cause a current to flow between two terminals out of three terminals of a three-phase motor under PWM control, a first signal information acquisition unit configured to acquire first signal information indicating an on-duty ratio of a PWM control signal in a three-phase energization state after a predetermined period has elapsed since the three-phase motor was started, and a determination unit configured to determine whether the three-phase motor is locked based on the first signal information.

FIG. 1

EP 4 266 568 A1

**Description**

TECHNICAL FIELD

The present invention relates to a motor control device that drives a three-phase motor.

BACKGROUND ART

Hitherto, three-phase motors have been used to obtain a rotational force. Such a three-phase motor is driven by a motor control device. When the motor control device drives the three-phase motor, a current to flow through coils of the three-phase motor are controlled by PWM control on an inverter. When the current is controlled to flow through the coils of the three-phase motor but the three-phase motor is locked, no rotational force can be obtained from the three-phase motor. Therefore, some motor control devices that drive three-phase motors have a function of determining whether the three-phase motor is locked (for example, Patent Document 1).

Patent Document 1 describes a control system for a vehicle drive motor. This control system includes a motor torque acquisition unit that acquires a motor torque output by a three-phase motor, a coil temperature detection unit that detects a temperature of a specific-phase coil among three-phase coils as a coil sensor temperature, and a control unit that updates other-phase estimated temperatures that are estimated temperatures of the other-phase coils that are coils other than the specific-phase coil among the three-phase coils by using the coil sensor temperature and a cumulative value of temperature rises per unit time at each time point for the other-phase coils, and controls the motor torque by using at least the other-phase estimated temperatures. The control unit determines whether the three-phase motor is locked by using at least one of the motor torque acquired by the motor torque acquisition unit and the number of revolutions of the three-phase motor.

Related Art Documents

Patent Documents

Patent Document 1: Japanese Unexamined Patent Application Publication No. 2016-195515 (JP 2016-195515 A)

SUMMARY OF THE INVENTION

Problem to be Solved by the Invention

In the technology described in Patent Document 1, determination is made as to whether the three-phase motor is locked by using the motor torque acquired by the motor torque acquisition unit and the number of revolutions of the three-phase motor as described above. Therefore, in the technology described in Patent Document 1, the determination cannot appropriately be made as to whether the three-phase motor is locked when the number of revolutions of the three-phase motor has not reached a predetermined number of revolutions.

In view of this, there is a demand for a motor control device that can appropriately determine whether the three-phase motor is locked regardless of the number of revolutions of the three-phase motor.

Means for Solving the Problem

A characteristic configuration of a motor control device according to the present invention is that the motor control device includes an inverter including three arms each including a high-side switching element and a low-side switching element connected in series between a first power supply line and a second power supply line to which a potential lower than a potential of the first power supply line is applied, a control unit configured to close the high-side switching element of a predetermined first arm among the three arms and the low-side switching element of a second arm out of the other two arms different from the first arm among the three arms, and cause a current to flow between two terminals out of three terminals of a three-phase motor under PWM control, a first signal information acquisition unit configured to acquire, after a predetermined period has elapsed since the three-phase motor was started, first signal information indicating an on-duty ratio of a PWM control signal in a three-phase energization state in which a current having a preset current value flows while sequentially switching the two terminals, and a determination unit configured to determine whether the three-phase motor is locked based on the first signal information.

With such a characteristic configuration, it is possible to determine whether the three-phase motor is locked based on the on-duty ratio. Thus, it is possible to appropriately determine whether the three-phase motor is locked regardless of the number of revolutions of the three-phase motor.

It is preferable that the motor control device include a second signal information acquisition unit configured to acquire, when the three-phase motor is started, second signal information indicating an on-duty ratio of the PWM control signal in a one-phase energization state in which the control unit causes the current having the preset current value to flow only between the two terminals for the predetermined period, and a difference calculation unit configured to calculate a difference between the on-duty ratio in the one-phase energization state and the on-duty ratio in the three-phase energization state based on the first signal information and the second signal information, and the determination unit be configured to determine whether the three-phase motor is locked based on the difference, and determine that the three-phase motor is not locked when the difference is equal to or larger than a preset value.

With such a configuration, it is possible to more appropriately determine whether the three-phase motor is locked based on the difference between the on-duty ratio in the one-phase energization state and the on-duty ratio in the three-phase energization state. Since the determination as to whether the three-phase motor is locked is made by using the second signal information, it is possible to correct, for example, a variation in characteristics of the three-phase motor and a change in temperature characteristics.

It is preferable that the motor control device further include a detection unit configured to detect a potential difference between the first power supply line and the second power supply line, and the second signal information acquisition unit be configured to convert the on-duty ratio that is based on the acquired second signal information into an on-duty ratio corresponding to a predetermined potential difference based on the potential difference detected by the detection unit, and update the on-duty ratio indicated by the second signal information with the on-duty ratio obtained by conversion.

With such a configuration, even if the potential difference between the first power supply line and the second power supply line when the first signal information is acquired differs from the potential difference between the first power supply line and the second power supply line when the second signal information is acquired, the determination is made by converting the on-duty ratio corresponding to the potential difference between the first power supply line and the second power supply line when the second signal information is acquired based on the potential difference between the first power supply line and the second power supply line when the first signal information is acquired. Thus, it is possible to prevent erroneous determination due to the variation in the potential difference between the first power supply line and the second power supply line.

It is preferable that the determination unit be configured to determine whether the three-phase motor is locked when a rotation speed of the three-phase motor is equal to or lower than a predetermined speed.

For example, the rotation speed of the three-phase motor may decrease depending on the situation of use of a device to which the three-phase motor outputs a rotational force. In a case where the rotation speed (number of revolutions) of a sensorless motor is detected based on an induced voltage, there is a possibility that positional detection cannot accurately be performed when the rotation speed of the motor is low (the number of revolutions is small). According to this configuration, determination is made as to whether the three-phase motor is locked when the rotation speed of the three-phase motor is equal to or lower than the predetermined speed. Thus, erroneous determination can be prevented even if the rotation speed of the three-phase motor decreases depending on the situation of use of the device to which the three-phase motor outputs the rotational force. Accordingly, it is possible to accurately detect the locked state of the three-phase motor.

It is preferable that the motor control device further include a third signal information acquisition unit configured to acquire third signal information indicating the on-duty ratio in the three-phase energization state of the three-phase motor when the determination unit has determined that the three-phase motor is not locked, and the determination unit be configured to, after the third signal information has been acquired, determine whether the three-phase motor is locked based on the third signal information and the first signal information.

With such a configuration, it is possible to appropriately determine whether the three-phase motor is locked, for example, even if the temperature of the coil of the three-phase motor rises along with the drive of the three-phase motor.

BRIEF DESCRIPTION OF THE DRAWINGS

[FIG. 1] FIG. 1 is a diagram showing a connection configuration between a motor control device and a three-phase motor.
[FIG. 2] FIG. 2 is a diagram illustrating the principle of locked state determination.
[FIG. 3] FIG. 3 is a diagram showing a relationship between an induced voltage and a characteristic of the three-phase motor.
[FIG. 4] FIG. 4 is a diagram showing a relationship between the induced voltage and an on-duty ratio.

MODES FOR CARRYING OUT THE INVENTION

A motor control device according to the present invention is configured to appropriately determine whether a three-phase motor is locked. A motor control device 1 of the present embodiment will be described below.

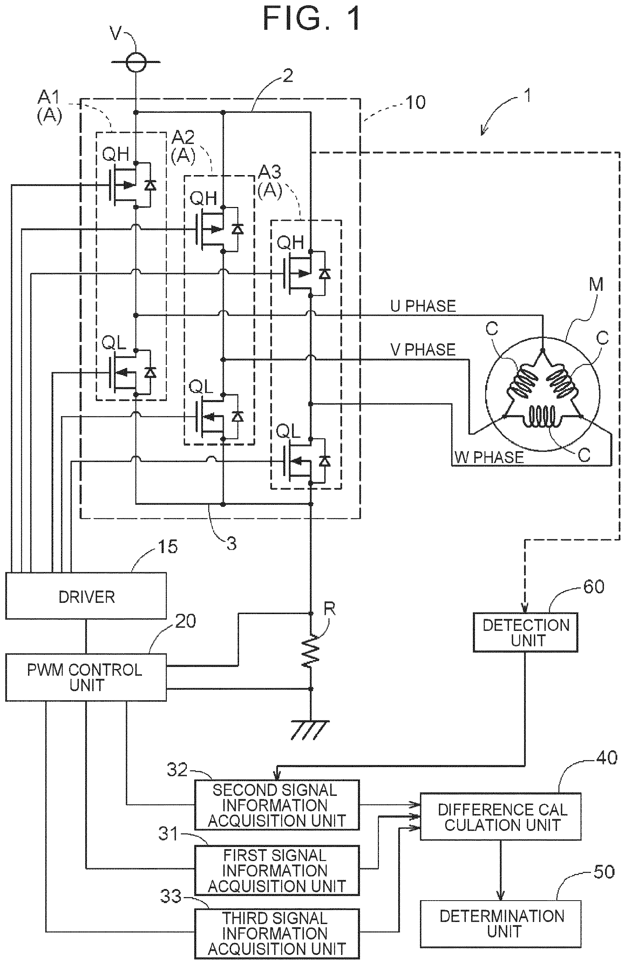

FIG. 1 is a diagram showing a connection configuration between the motor control device 1 and a three-phase motor M. The motor control device 1 is shown in a block diagram showing functional units. As shown in FIG. 1, the motor control device 1 includes an inverter 10, a PWM control unit (an example of "control unit") 20, a first signal information acquisition unit 31, a second signal information acquisition unit 32, a third signal information acquisition unit 33, a difference calculation unit 40, a determination unit 50, and a detection unit 60. Each functional unit is implemented by hardware, software, or both of them with a CPU serving as a core member in order to perform processes related to locked state determination.

The inverter 10 controls a current to flow through the three-phase motor M. In the present embodiment, the three-phase motor M is exemplified as being structured by delta connection as shown in FIG. 1, but may be structured by star connection.

The inverter 10 includes three arms A each including a high-side switching element QH and a low-side switching element QL connected in series between a first power supply line 2 and a second power supply line 3 connected at a potential lower than the potential of the first power supply line 2. The first power supply line 2 is a cable connected to a power supply V. The second power supply line 3 connected at a potential lower than the potential of the first power supply line 2 is a cable to which a potential lower than the output voltage of the power supply V is applied. In the present embodiment, the second power supply line 3 is connected to one terminal of a resistor R with the other terminal grounded.

In the present embodiment, the high-side switching element QH is structured by using a P-MOSFET, and the low-side switching element QL is structured by using an N-MOSFET. The high-side switching element QH has a source terminal connected to the first power supply line 2 and a drain terminal connected to a drain terminal of the low-side switching element QL. A source terminal of the low-side switching element QL is connected to the second power supply line 3. The high-side switching element QH and the low-side switching element QL connected in this manner constitute the arm A, and the inverter 10 includes three arms A. Gate terminals of the high-side switching element QH and the low-side switching element QL are connected to a driver 15. The drain terminals of the high-side switching elements QH of the arms A are connected to three terminals of the three-phase motor M.

The PWM control unit 20 generates a PWM signal and performs PWM control on the high-side switching elements QH and the low-side switching elements QL of the inverter 10. Specifically, the PWM control unit 20 closes the high-side switching element QH of a predetermined first arm among the three arms A and the low-side switching element QL of a second arm out of the other two arms different from the first arm among the three arms A, and causes a current to flow between two terminals out of the three terminals of the three-phase motor M under PWM control.

For ease of understanding, the three arms A are referred to as "first arm A1", "second arm A2", and "third arm A3". The phrase "the high-side switching element QH of a predetermined first arm among the three arms A and the low-side switching element QL of a second arm out of the other two arms different from the first arm among the three arms A" means, for example, the high-side switching element QH of the first arm A1 and the low-side switching element QL of one arm A out of the second arm A2 and the third arm A3. Therefore, the switching elements to be closed are such that a so-called through current does not flow from the first power supply line 2 to the second power supply line 3 when the high-side switching element QH and the low-side switching element QL are closed simultaneously.

The three terminals of the three-phase motor M are a U-phase terminal, a V-phase terminal, and a W-phase terminal of the three-phase motor M. For example, when the high-side switching element QH of the first arm A1 and the low-side switching element QL of the second arm A2 are closed, a current flows from the U-phase terminal to the V-phase terminal of the three-phase motor M under the PWM control. For example, when the high-side switching element QH of the second arm A2 and the low-side switching element QL of the first arm A1 are closed, a current flows from the V-phase terminal to the U-phase terminal of the three-phase motor M under the PWM control.

When driving the three-phase motor M, the PWM control unit 20 causes the current to flow while sequentially switching coils C of the three-phase motor M. Therefore, during the drive of the three-phase motor M, the current is caused to flow while sequentially switching two terminals out of the three terminals of the three-phase motor M. In the present embodiment, a state in which the PWM control unit 20 causes a current having a preset current value to flow while sequentially switching two terminals is referred to as "three-phase energization state". A state in which the PWM control unit 20 causes the current having the preset current value to flow only between two terminals for a predetermined period is referred to as "one-phase energization state".

For example, the PWM signal output from the PWM control unit 20 can be input to the driver 15 and the driver 15 can input the PWM signal to the inverter 10 with its drive performance improved.

The PWM control unit 20 detects the position of a rotor (not shown) of the three-phase motor M based on the motor current flowing through the three-phase motor M. In the present embodiment, as shown in FIG. 1, the resistor R is provided between a ground potential and the second power supply line 3 to which the source terminal of the low-side switching element QL of each arm A is connected. The PWM control unit 20 detects the motor current based on a potential between terminals of the resistor R, and detects (calculates) the position of the rotor. Since the detection of the position of the rotor is known, description thereof will be omitted. The PWM control unit 20 performs feedback control based on the current flowing through the three-phase motor M as described above.

The second signal information acquisition unit 32 acquires second signal information indicating an on-duty ratio of a PWM control signal in the one-phase energization state when the three-phase motor M is started. As described above, the one-phase energization state is the state in which the PWM control unit 20 causes the current having the preset current value to flow only between two terminals for the predetermined period. The energization performed only between the two terminals for the predetermined period is referred to as "one-phase energization". The second signal information acquisition unit 32 acquires, as the second signal information, information indicating the on-duty ratio of the PWM control signal related to the one-phase energization when the three-phase motor M is started. The PWM control signal is generated by the PWM control unit 20 and output to the inverter 10 via the driver 15. Therefore, the second signal information acquisition unit 32 is configured to acquire the second signal information from the PWM control unit 20.

The first signal information acquisition unit 31 acquires first signal information indicating the on-duty ratio of the PWM control signal in the three-phase energization state after a predetermined period has elapsed since the three-phase motor M was started. As described above, the three-phase energization state is the state in which the PWM control unit 20 performs energization while sequentially switching two terminals (between terminals) out of the three terminals of the three-phase motor M. The energization performed while sequentially switching two terminals is referred to as "three-phase energization". The first signal information acquisition unit 31 acquires, as the first signal information, information indicating the on-duty ratio of the PWM control signal related to the three-phase energization after the three-phase motor M has been started and at least the one-phase energization has been finished. The first signal information acquisition unit 31 is configured to acquire the first signal information from the PWM control unit 20.

The difference calculation unit 40 calculates a difference between the on-duty ratio in the one-phase energization state and the on-duty ratio in the three-phase energization state based on the first signal information and the second signal information. The second signal information indicates the on-duty ratio in the one-phase energization state, and the first signal information indicates the on-duty ratio in the three-phase energization state. The first signal information is transmitted from the first signal information acquisition unit 31 to the difference calculation unit 40, and the second signal information is transmitted from the second signal information acquisition unit 32 to the difference calculation unit 40. The difference calculation unit 40 calculates a difference between the on-duty ratio in the one-phase energization state that is indicated by the second signal information and the on-duty ratio in the three-phase energization state that is indicated by the first signal information. The calculation result from the difference calculation unit 40 is transmitted to the determination unit 50 described later.

Based on the difference, the determination unit 50 determines whether the three-phase motor M is locked. The difference is the difference that is calculated by and transmitted from the difference calculation unit 40 and is between the on-duty ratio in the one-phase energization state that is indicated by the second signal information and the on-duty ratio in the three-phase energization state that is indicated by the first signal information. The determination unit 50 determines that the three-phase motor M is not locked when the difference is equal to or larger than a preset value. When the three-phase motor M is not locked, that is, when the PWM control unit 20 performs the PWM control so that the current having the predetermined current value flows through the three-phase motor M and the three-phase motor M rotates appropriately, the on-duty ratios in the one-phase energization state and the three-phase energization state differ greatly. When the three-phase motor M is locked in the three-phase energization state, the on-duty ratios in the one-phase energization state and the three-phase energization state are approximately the same. Therefore, the determination unit 50 determines that the three-phase motor M is not locked when the on-duty ratios in the one-phase energization state and the three-phase energization state differ greatly (when the difference is equal to or larger than the preset value) as described above.

The detection unit 60 detects a potential difference between the first power supply line 2 and the second power supply line 3. In the present embodiment, the potential difference between the first power supply line 2 and the second power supply line 3 is a value of voltage drop between both ends of the arm A of the inverter 10, that is, voltage drop related to the potential of the source terminal of the low-side switching element QL with respect to the potential of the source terminal of the high-side switching element QH. The detection unit 60 detects such a potential difference and transmits it to the second signal information acquisition unit 32.

The second signal information acquisition unit 32 converts the on-duty ratio that is based on the acquired second signal information into an on-duty ratio corresponding to a predetermined potential difference based on the potential difference detected by the detection unit 60, and updates the on-duty ratio indicated by the second signal information with the on-duty ratio obtained by the conversion. The on-duty ratio that is based on the acquired second signal information is the on-duty ratio when the PWM control unit 20 has actually performed the one-phase energization. It is appropriate that the detection unit 60 also detect the potential difference between both ends of the arm A of the inverter 10 at this time and store it in association. The potential difference detected by the detection unit 60 is the potential difference between both ends of the arm A of the inverter 10 that is detected by the detection unit 60. The on-duty ratio corresponding to the predetermined potential difference is an on-duty ratio when the energization is performed with a preset reference potential difference (for example, V1 volts). Therefore, the second signal information acquisition unit 32 converts the on-duty ratio when the PWM control unit 20 has actually performed the one-phase energization into the on-duty ratio when the energization is performed with the preset reference potential difference (for example, V1 volts) based on the potential difference between both ends of the arm A of the inverter 10 that is detected by the detection unit 60. Further, update is made to use the on-duty ratio obtained by such conversion as the on-duty ratio indicated by the second signal information.

Thus, the difference is calculated based on the on-duty ratio related to the common potential difference even if, for example, the potential difference between both ends of the arm A of the inverter 10 when the one-phase energization is performed differs from the potential difference between both ends of the arm A of the inverter 10 when the three-phase energization is performed. Accordingly, erroneous determination due to the potential difference can be prevented and accurate determination can be made.

In the manner described above, the motor control device 1 can appropriately determine whether the three-phase motor M is locked after the predetermined period has elapsed since the three-phase motor M was started.

The motor control device 1 of the present embodiment includes the third signal information acquisition unit 33 that acquires third signal information indicating the on-duty ratio in the three-phase energization state of the three-phase motor M when the determination unit 50 has determined that the three-phase motor M is not locked. The case where the determination unit 50 has determined that the three-phase motor M is not locked is, as described above, the case where the determination unit 50 has determined that the three-phase motor M is not locked when the on-duty ratios in the one-phase energization state and the three-phase energization state differ greatly (when the difference is equal to or larger than the preset value). The third signal information acquisition unit 33 acquires, as the third signal information, information indicating the on-duty ratio of the PWM control signal related to the three-phase energization continuously performed when the determination unit 50 has determined that the three-phase motor M is not locked. The third signal information acquisition unit 33 is configured to acquire the third signal information from the PWM control unit 20.

In this case, after the third signal information acquisition unit 33 has acquired the third signal information, the determination unit 50 determines whether the three-phase motor M is locked based on the third signal information and the first signal information. When the three-phase motor M is rotating in response to the PWM control signal from the PWM control unit 20, the difference between the on-duty ratio indicated by the first signal information and the on-duty ratio indicated by the third signal information is expected to be small. When the three-phase motor M is not rotating in response to the PWM control signal from the PWM control unit 20, the difference between the on-duty ratio indicated by the first signal information and the on-duty ratio indicated by the third signal information is expected to be large. Therefore, the difference calculation unit 40 calculates the difference between the on-duty ratio indicated by the first signal information and the on-duty ratio indicated by the third signal information, and the determination unit 50 acquires the calculation result and makes determination. Thus, it is possible to determine whether the three-phase motor M is locked even when the three-phase motor M is in the three-phase energization state.

It is appropriate that the determination unit 50 determine whether the three-phase motor M is locked when the rotation speed of the three-phase motor M is equal to or lower than a predetermined speed. For example, when the three-phase motor M is used to drive an oil pump, the rotation speed of the three-phase motor M changes depending on the viscosity of oil. In this case, determination is made as to whether the three-phase motor M is locked when the rotation speed of the three-phase motor M is equal to or lower than the predetermined speed. Thus, it is possible to prevent erroneous determination due to a decrease in the rotation speed of the three-phase motor M caused by the viscosity of the oil.

As described above, the motor control device 1 can determine whether the three-phase motor M is locked based on the on-duty ratio. To promote understanding, the principle of locked state determination will be supplemented.

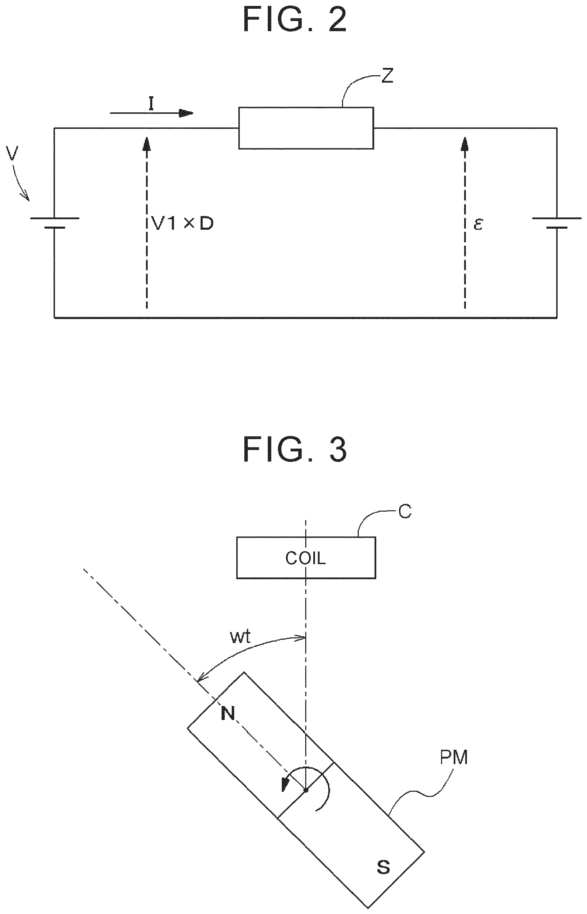

FIG. 2 is a diagram illustrating the principle of determination. It is assumed that V1 represents an output voltage of the power supply V, D represents an on-duty ratio of the PWM control signal from the PWM control unit 20, Z represents an impedance (phase impedance) between two predetermined terminals of the three-phase motor M, I represents a phase current, and $\varepsilon$ represents an induced voltage of the three-phase motor M. The PWM control unit 20 sets the on-duty ratio so that the phase current I becomes constant.

From FIG. 2, Equation (1) holds.
[Equation 1]

$$V1 \times D = I \times Z + \varepsilon \quad ... (1)$$

Equation (2) is obtained from Equation (1).
[Equation 2]

$$D = \frac{\varepsilon}{V1} + \frac{I \times Z}{V1} \quad ... (2)$$

As described above, the PWM control unit 20 sets the on-duty ratio so that the phase current I becomes constant. The impedance (phase impedance) Z between two predetermined terminals of the three-phase motor M is constant. The output voltage V1 of the power supply V is constant. Therefore, the on-duty ratio D is expressed by a linear function of the induced voltage $\varepsilon$ of the three-phase motor M.

The induced voltage $\varepsilon$ of the three-phase motor M is expressed by Equation (3). In this equation, N represents the number of turns of the coil, and $\Phi$ represents a magnetic flux.
[Equation 3]

$$\varepsilon = -N \frac{d\Phi(t)}{dt} \quad ... (3)$$

FIG. 3 is a diagram schematically showing a relationship between the coil C of the three-phase motor M and a permanent magnet PM. In FIG. 3, a flux linkage $\Phi(t)$ of the coil C is expressed by Equation (4).
[Equation 4]

$$\Phi(t) = \Phi \times \cos\omega t \quad ...(4)$$

Equation (5) is obtained from Equations (3) and (4).
[Equation 5]

$$\varepsilon = -N\frac{d\Phi\cos\omega t}{dt} = N\Phi\omega\sin\omega t \quad ...(5)$$

An angular velocity $\omega$ [rad/sec] of the three-phase motor M is determined by Equation (6) based on the number of revolutions n [rpm] and the number of motor slots s [pieces] of the three-phase motor M.
[Equation 6]

$$\omega = n \times \frac{s}{3} \times 60 \times 2\pi = 40nS\pi \quad ...(6)$$

Therefore, the induced voltage $\varepsilon$ of the three-phase motor M is proportional to the number of revolutions n of the three-phase motor M according to Equations (5) and (6). By monitoring the on-duty ratio D according to Equation (2), it is possible to determine whether the three-phase motor M is locked (whether the number of revolutions n of the three-phase motor M is zero).

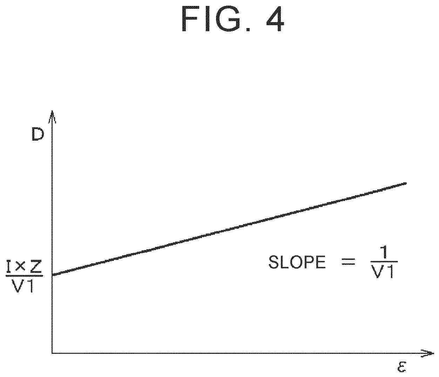

FIG. 4 is a graph showing Equation (2). According to Equation (2), the slope is 1 / V1 and the intercept is (I × Z) / V1. As shown in FIG. 4, the sensitivity of the on-duty ratio D to the induced voltage $\varepsilon$ of the three-phase motor M is 1 / V1. Therefore, the effect of the on-duty ratio D on the induced voltage $\varepsilon$ of the three-phase motor M decreases as the output voltage V1 of the power supply V increases. The phase current I and the impedance Z do not affect the sensitivity of the on-duty ratio D to the induced voltage $\varepsilon$ of the three-phase motor M.

As described above, it is apparent that the motor control device 1 can determine whether the three-phase motor M is locked based on the on-duty ratio.

[Other Embodiments]

In the above embodiment, description has been given of the case where the motor control device 1 includes the detection unit 60 that detects the potential difference between the first power supply line 2 and the second power supply line 3. The motor control device 1 may be structured without the detection unit 60. In such a case, it is appropriate that the second signal information acquisition unit 32 be configured not to update the on-duty ratio that is based on the second signal information.

Instead of the detection unit 60, another method may be used to detect the potential difference between the first power supply line 2 and the second power supply line 3, or the output voltage of the power supply V may be detected directly.

In the above embodiment, description has been given of the case where the determination unit 50 determines whether the three-phase motor M is locked when the rotation speed of the three-phase motor M is equal to or lower than the predetermined speed. The determination unit 50 may determine whether the three-phase motor M is locked regardless of the rotation speed of the three-phase motor M.

In the above embodiment, description has been given of the case where the motor control device 1 includes the inverter 10, the PWM control unit (an example of "control unit") 20, the first signal information acquisition unit 31, the second signal information acquisition unit 32, the third signal information acquisition unit 33, the difference calculation unit 40, the determination unit 50, and the detection unit 60. The motor control device 1 may be structured without the second signal information acquisition unit 32 and the difference calculation unit 40. In this case, the determination unit 50 can determine whether the three-phase motor M is locked based on the first signal information related to the three-phase energization state without using the second signal information related to the one-phase energization state. For example, when the on-duty ratio indicated by the first signal information is smaller than a preset value, the determination unit 50 can determine that the three-phase motor M is locked. Alternatively, when the on-duty ratio indicated by the first signal information is equal to or larger than the preset value, the determination unit 50 can determine that the three-phase motor M is not locked.

In the above embodiment, description has been given of the case where the motor control device 1 includes the third signal information acquisition unit 33 that acquires the third signal information indicating the on-duty ratio in the three-phase energization state of the three-phase motor M when the determination unit 50 has determined that the three-phase motor M is not locked. The motor control device 1 may be structured without the third signal information acquisition unit 33.

INDUSTRIAL APPLICABILITY

The present invention can be used for a motor control device that drives a three-phase motor.

Description of the Reference Numerals

    1: motor control device
    2: first power supply line
    3: second power supply line
    10: inverter

20: PWM control unit (control unit)
31: first signal information acquisition unit
32: second signal information acquisition unit
33: third signal information acquisition unit
40: difference calculation unit
50: determination unit
60: detection unit
A: arm
LH: low-side switching element
M: three-phase motor
QH: high-side switching element

**Claims**

1. A motor control device comprising:

    an inverter including three arms each including a high-side switching element and a low-side switching element connected in series between a first power supply line and a second power supply line to which a potential lower than a potential of the first power supply line is applied;
    a control unit configured to close the high-side switching element of a predetermined first arm among the three arms and the low-side switching element of a second arm out of the other two arms different from the first arm among the three arms, and cause a current to flow between two terminals out of three terminals of a three-phase motor under PWM control;
    a first signal information acquisition unit configured to acquire, after a predetermined period has elapsed since the three-phase motor was started, first signal information indicating an on-duty ratio of a PWM control signal in a three-phase energization state in which a current having a preset current value flows while sequentially switching the two terminals; and
    a determination unit configured to determine whether the three-phase motor is locked based on the first signal information.

2. The motor control device according to claim 1, further comprising:

    a second signal information acquisition unit configured to acquire, when the three-phase motor is started, second signal information indicating an on-duty ratio of the PWM control signal in a one-phase energization state in which the control unit causes the current having the preset current value to flow only between the two terminals for the predetermined period; and
    a difference calculation unit configured to calculate a difference between the on-duty ratio in the one-phase energization state and the on-duty ratio in the three-phase energization state based on the first signal information and the second signal information, wherein
the determination unit is configured to determine whether the three-phase motor is locked based on the difference, and determine that the three-phase motor is not locked when the difference is equal to or larger than a preset value.

3. The motor control device according to claim 2, further comprising a detection unit configured to detect a potential difference between the first power supply line and the second power supply line, wherein the second signal information acquisition unit is configured to convert the on-duty ratio that is based on the acquired second signal information into an on-duty ratio corresponding to a predetermined potential difference based on the potential difference detected by the detection unit, and update the on-duty ratio indicated by the second signal information with the on-duty ratio obtained by conversion.

4. The motor control device according to claim 2 or 3, wherein the determination unit is configured to determine whether the three-phase motor is locked when a rotation speed of the three-phase motor is equal to or lower than a predetermined speed.

5. The motor control device according to any one of claims 2 to 4, further comprising a third signal information acquisition unit configured to acquire third signal information indicating the on-duty ratio in the three-phase energization state of the three-phase motor when the determination unit has determined that the three-phase motor is not locked, wherein the determination unit is configured to, after the third signal information has been acquired, determine whether the three-phase motor is locked based on the third signal information and the first signal information.

# FIG. 1

# FIG. 2

# FIG. 3

# FIG. 4

$D$

$\frac{I \times Z}{V1}$

SLOPE $= \frac{1}{V1}$

$\varepsilon$

## INTERNATIONAL SEARCH REPORT

| International application No. |
|---|
| **PCT/JP2021/042055** |

### A. CLASSIFICATION OF SUBJECT MATTER

*H02P 6/20*(2016.01)i
FI: H02P6/20

According to International Patent Classification (IPC) or to both national classification and IPC

### B. FIELDS SEARCHED

Minimum documentation searched (classification system followed by classification symbols)

H02P6/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2007-236153 A (JTEKT CORP.) 13 September 2007 (2007-09-13) paragraphs [0001]-[0017], fig. 1, 2, particularly, paragraph [0014] | 1 |
| A | | 2-5 |
| Y | JP 2012-239301 A (AISIN SEIKI CO., LTD.) 06 December 2012 (2012-12-06) paragraphs [0016]-[0030], [0048], fig. 1, 2 | 1 |
| A | | 2-5 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/042055** |

| Patent document cited in search report | Publication date (day/month/year) | Patent family member(s) | Publication date (day/month/year) |
| --- | --- | --- | --- |
| JP 2007-236153 A | 13 September 2007 | (Family: none) | |
| JP 2012-239301 A | 06 December 2012 | (Family: none) | |

Form PCT/ISA/210 (patent family annex) (January 2015)

**REFERENCES CITED IN THE DESCRIPTION**

**Patent documents cited in the description**

• JP 2016195515 A